# EUROPÄISCHE PATENTSCHRIFT

(11) **EP 2 252 477 B1**
(45) Veröffentlichungstag und Bekanntmachung des Hinweises auf die Patenterteilung: **25.04.2012**
(21) Anmeldenummer: 09720369.9
(22) Anmeldetag: 27.02.2009
(51) Int. Cl.: B60L 3/04, H01R 13/66

(54) **VERFAHREN UND EINE VORRICHTUNG ZUR ÜBERWACHUNG VON HOCHVOLTVERBINDUNGEN EINES HYBRIDFAHRZEUGS**
METHOD AND A DEVICE FOR MONITORING HIGH-VOLTAGE CONNECTIONS OF A HYBRID VEHICLE
PROCEDE ET DISPOSITIF DE CONTROLE DE LIAISONS HAUTE TENSION D'UN VEHICULE HYBRIDE

(30) Priorität: 01.03.2008 DE 102008011962; 30.04.2008 DE 102008021542
(43) Veröffentlichungstag der Anmeldung: 24.11.2010
(73) Patentinhaber: LEONI Bordnetz-Systeme GmbH, 90402 Nürnberg (DE); Continental Automotive GmbH, 30165 Hannover (DE)
(72) Erfinder: KUSCHNAREW, Christian, 97076 Würzburg (DE); HARTMANN, Volker, 97355 Castell (DE); ALBERT, Volker, 97337 Dettelbach (DE); EBERT, Matthias, 97337 Dettelbach (DE)
(74) Vertreter: FDST Patentanwälte
(86) Internationale Anmeldenummer: PCT/EP2009/001413
(87) Internationale Veröffentlichungsnummer: WO 2009/112165

(56) Entgegenhaltungen:
- EP-A1- 1 351 107
- DE-A1-102005 055 075
- DE-A1-102006 047 039
- US-B1- 7 084 361

## Beschreibung

Die Erfindung betrifft eine Überwachungsvorrichtung zum Überspannungs- oder Berührungsschutz eines Hybridfahrzeugs gemäß dem Oberbegriff des Anspruchs 1. Eine derartige Vorrichtung ist z. B. aus der US 7,084,361 B1 bekannt. Die Erfindung bezieht sich weiter auf ein Verfahren zur Hochvoltüberwachung eines solchen Hybridfahrzeugs. Unter Überwachungsschutz wird hierbei insbesondere ein Schutz vor Berührungen gefährlicher Spannungen (Berührungsschutz) verstanden.

Ein elektrisches Antriebssystem einer Antriebskonfiguration in einem Kraftfahrzeug mit Hochvoltkomponenten (Hybridantrieb, Hybrid-, Elektro- oder Brennstoffzellenfahrzeug) mit mindestens einer elektrischen Maschine (Synchron- oder Asynchronmaschine) weist Hochvoltkomponenten mit Spannungen von derzeit bereits über 300V (größer 60V_{DC}, größer 25V_{AC}) auf. Hierzu gehören insbesondere auch Leistungsstellglieder, wie insbesondere Umrichter, Stromrichter und/oder Wandler, einer elektronischen Steuerungseinheit oder ECU (electronic Controller Unit).

Das sich aus den Hochvolt-Komponenten und einer diese speisende Hochvoltbatterie zusammensetzende Hochvoltnetz ist üblicherweise mit einem Zugangsschutz gesichert, um eine Verletzungsgefahr bei einer Berührung der die hohe Spannung führenden Hochvoltkomponenten zu vermeiden. So ist beispielsweise bei abgeschaltetem Antriebssystem (und noch drehender Maschine) ein Berührungsschutz vor einer an den Motorklemmen der elektrischen Maschine noch verfügbare hohe Spannung sicherzustellen. Auch muss beim Lösen von Steckkontakten oder Kontaktverbindungen sowie beim Öffnen des Maschinengehäuses der elektrischen Maschine oder des Gerätegehäuses der die Leistungsstellglieder enthaltenden elektronischen Steuerungseinheit ein Absinken der hohen Spannung in kürzester Zeit sichergestellt werden.

Der Erfindung liegt die Aufgabe zugrunde, eine Vorrichtung zum Überspannungsschutz eines Hybridfahrzeugs gegen Berührung einer gefährlichen Spannung anzugeben, die bei gleichzeitig hoher Berührungssicherheit einfach aufgebaut ist. Des Weiteren soll ein geeignetes Verfahren zur berührungssicheren Überwachung der Hochvoltkomponenten und insbesondere der oder jeder elektrischen Maschine eines Hybridfahrzeugs anzugeben.

Bezüglich der Vorrichtung wird diese Aufgabe erfindungsgemäß gelöst durch die Merkmale des Anspruchs 1. Demnach sind bei der zum Schutz dienenden Überwachungsvorrichtung für ein Hybridfahrzeug, insbesondere für dessen elektrisches Antriebssystem, die Hochvoltkomponenten mittels einer Leitungsschleife überwacht. Diese Überwachung erstreckt sich zweckmäßigerweise zumindest auf diejenigen Hochvoltkomponenten, die zusammen mit einer Hochvoltbatterie und einen Leistungsschalter (Relais oder Schütz) an ein Hochvolt-Spannungsnetz des Hybridfahrzeugs angeschlossen sind, und bei denen eine Hochvoltberührung möglich oder nicht auszuschließen ist. Hierzu gehören insbesondere die oder jede elektrische Maschine und diese speisende Leistungsstellglieder, die von einer elektronischen Steuerungseinheit (ECU) gesteuert und in einem entsprechenden Gerätegehäuse angeordnet sind. Die Steuerungseinheit ist an eine Niedervolt-Bordnetzbatterie, beispielsweise an eine übliche 12V_{DC}- oder 14V_{DC}-Batterie, angeschlossenen.

Die Leitungsschleife ist geeigneterweise als Signalleitung oder Signalleitungssystem ausgeführt, die bzw. das alle zu überwachenden Hochvoltkomponenten miteinander verbindet. Eine Unterbrechung oder Kurzschluss gegen Masse oder gegen den Pluspol der Bordnetzbatterie an beliebiger Stelle innerhalb der Leitungsschleife wird detektiert und es werden alle Hochvoltkomponenten deaktiviert. Praktisch zeitgleich öffnet der als Hauptschütz dienende Leistungsschalter infolge einer entsprechenden Ansteuerung und trennt alle Komponenten vom Hochvoltnetz.

Die Detektion der geöffneten, als Hochvoltunterbrechungskreis oder -anforderung wirksamen Leitungsschleife erfolgt kontaktlos mittels eines magnetfeldsensitiven Sensors, vorzugsweise mittels eines Hall-Sensors, der zweckmäßigerweise einen gegen das Bordnetzbezugspotential (Masse, Ground) schaltbaren Signalausgang aufweist. Der Sensor ist über eine lösbare Kontaktverbindung der elektrischen Maschine und/oder der elektronischen Steuerungseinheit an die Leitungsschleife angebunden. Die Anbindung des Sensors erfolgt zweckmäßigerweise durch dessen Einbindung in eine oder mehrere bereits vorhandene Signalleitungen des Antriebssystems in Verbindung mit der Kontaktverbindung. Die kontaktlose informationsübertragung (Leitungsschleife offen oder geschlossen) ist geeigneterweise im leistungsführender Hochvolt-Steckkontakt oder -Schraubkontakt (z. B. mittels eines Permanentmagneten) ausgebildet.

Beim Lösen der Kontaktverbindung des Signal- oder Leistungspfades erzeugt der Sensor ein Sensorsignal, anhand dessen die elektronische Steuerungseinheit, insbesondere ein hierfür vorgesehener Funktions- oder Steuerbaustein, eine Entladungseinheit aktiviert, so dass ein im Hochvolt-Leistungskreis eingebundener Energiespeicher in Form insbesondere eines oder mehrerer Zwischenkreiskondensatoren innerhalb kürzester Zeit entladen wird. Das Lösen der Kontaktverbindung kann durch Abziehen eines entsprechenden Steckkontaktes oder durch Öffnen eines Maschinengehäuses der elektrischen Maschine bzw. eines Gerätegehäuses der elektronischen Steuerungseinheit erfolgen.

Der Steuerbaustein der elektronischen Steuerungseinheit ist geeigneterweise über einen Optokoppler mit der Entladungseinheit gekoppelt. Bei einer Abweichung des Sensorsignals bzw. dessen Spannungswertes von einer Referenzspannung erzeugt der Steuerbaustein ein Steuersignal zur Aktivierung der Entladungseinheit. Praktisch ebenfalls wiederum vorzugsweise zeitgleich erzeugt der Steuerbaustein beim Lösen der Kontaktverbindung ein Steuersignal, das die Leistungsstellglieder sperrt. Die Entladung des Energiespeichers bzw. die Blockierung oder Deaktivierung der Leistungsstellglieder erfolgt stets dann, wenn das Sensorsignal, d. h. ein diesem entsprechender oder hieraus abgeleiteter Spannungswert einen zweckmäßigerweise aus der Klemmspannung der Niedervolt-Bordnetzbatterie abgeleiteten Referenzwert unterschreitet oder überschreitet. So wird vorzugsweise auf eine fehlerhafte Leitungsschleife geschlossen, wenn der sensorische Spannungswert von beispielsweise der halben Klemmspannung (+14V) der Bordnetzbatterie zu einem größeren oder zu einem geringeren Bruchteil der Klemmspannung abweicht.

Die elektronische Steuerungseinheit weist eine Anzahl von Signaleingängen auf, von denen zumindest zwei Eingänge an den Steuerbaustein geführt sind. Weitere Anschlüsse oder Anschlusskontakte der Steuerungseinheit sind mit der Entladungseinheit verbunden, die ihrerseits ausgangsseitig an den Energiespeicher in Form eines typischen Zwischenkreiskondensators geführt ist. Die Anschlusskontakte dienen zum Anschluss der elektronischen Steuerungseinheit an die Hochvoltbatterie.

Ein erster Eingang der elektronischen Steuerungseinheit ist zweckmäßigerweise an die Niedervolt-Bordnetzbatterie anschließbar und an einen Referenzeingang des Steuerbausteins geführt sowie - zweckmäßigerweise über einen ohmschen Widerstand - mit einem zweiten Eingang verbunden. An diesen ist die Leitungsschleife anschließbar, die über einen dritten Eingang der elektronischen Steuerungseinheit mit einem nachfolgend als Signaleingang bezeichneten Überwachungseingang des Steuerbausteins verbunden ist.

Der Signaleingang des Steuerbausteins ist geeigneterweise über einen steuerbaren Halbleiterschalter, vorzugsweise einen bipolaren Transistor, gegen das Bordnetzpotenzial (Masse oder Ground) geschaltet. An den Signaleingang des Steuerbausteins kann das Sensorsignal bzw. der entsprechende Spannungswert örtlich unabhängig davon geführt werden, wo sich der jeweilige magnetfeldsensitive Sensor befindet. Im Falle der Kontaktverbindung der elektronischen Steuerungseinheit befindet sich der magnetfeldsensitive Sensor zweckmäßigerweise innerhalb des Gerätegehäuses.

Bei der maschinenseitigen Kontaktverbindung befindet sich der Sensor geeigneterweise im Maschinengehäuse. Bei dieser Variante ist der Sensor mit einem der entsprechenden elektrischen Maschine zugeordneten Temperatursensor verbunden. Über dessen üblicherweise bereits vorhandene Signalleitung oder Leitungsverbindung zur elektronischen Steuerungseinheit wird zusätzlich zum betriebsbedingten Temperatursignal auch ein sensorisch erfasstes Öffnen der Leiterschleife in Folge eines Öffnens der Kontaktverbindung als entsprechend auswertbarer Zustand an die elektronische Steuerungseinheit geführt. Eine hierzu vorgesehene Auswerteeinheit, die innerhalb der elektronischen Steuerungseinheit sowohl das Temperatursignal als auch das vom Sensor erfasste Öffnen der Leitungsschleife auswertet, liefert ein entsprechendes Steuersignal an den Transistor. Demzufolge wird der Spannungswert am Signaleingang des Steuerbausteins entsprechend verändert und die Entladungseinheit zur Entladung der in den Hochvolt-Leistungskreis eingebundenen Hochvolt-Energiespeicher aktiviert. Gleichzeitig werden die Leistungsstellglieder gesperrt.

Die mit der Erfindung erzielten Vorteile bestehen insbesondere darin, dass mittels eines magnetfeldsensitiven Sensors, der an eine als Überspannungsbegrenzungskreis oder als sogenannte "Hazardous Voltage Interlock Loop (HVIL)" wirksame Leitungsschleife praktisch kontaktlos angekoppelt ist, eine besonders zuverlässige und sowohl leitungssparende als auch kontaktsparende Überwachung zumindest derjenigen Hochvoltkomponenten eines Hybridfahrzeugs ermöglicht ist, die einen Berührungs-, Zugangs- oder Überspannungsschutz erfordern. Hierdurch kann sowohl zeitunabhängig als auch ortsunabhängig eine Unterbrechung innerhalb der Leitungsschleife detektiert werden und jede Hochvoltkomponente in kürzester Zeit deaktiviert sowie zusätzlich die Restladung aus dem System durch die praktisch unverzögerte Aktivierung der Entladungseinheit für die Energiespeicher oder Zwischenkreiskondensatoren herausgenommen werden.

Die erfindungsgemäße Vorrichtung und das erfindungsgemäße Verfahren eignen sich somit insbesondere als Berührungsschutz gefährlicher Spannungen eines hybridelektrischen Fahrzeugs. Werden Kontaktverbindungen in Form von Steckkontakten oder durch Öffnen eines Hochvolt-Komponenten enthaltenden Gehäuses, insbesondere das Maschinengehäuse der elektrischen Maschine oder das Gerätegehäuse der elektronischen Steuerungseinheit mit den Leistungsstellgliedem, geöffnet, so wird innerhalb kürzester Zeit die Ansteuerung der Leistungsstellglieder gesperrt und praktisch zeitgleich der Energiespeicher entladen. Diese Maßnahmen erfolgen aufgrund des Einsatzes der magnetfeldsensitiven Sensoren kontaktlos und somit praktisch ohne zusätzlichen Signalleitungsaufwand, indem insbesondere die Signalleitungen des Temperatursensors der elektrischen Maschine zusätzlich auch für das Sensorsignal genutzt wird.

Bezüglich des Verfahrens zur Überwachung, ob die oder jede Hochvoltverbindung eines Fahrzeugs mit Hochvoltkomponenten geschlossen ist, wird die genannte Aufgabe erfindungsgemäß gelöst durch die Merkmale des Anspruchs 12. Hierzu werden einerseits die Hochvoltkomponenten, die mittels der als Detektions- oder Begrenzungskreis wirksamen Leitungsschleife überwacht werden, bei geöffneter Leitungsschleife deaktiviert. Andererseits werden infolge eines vom Sensor erfassten Lösens einer Kontaktverbindung innerhalb des Hochvolt-Spannungsnetzes die Entladung des an den Hochvoltkreis angebundenen Energiespeichers des hybridelektrischen Fahrzeugantriebs aktiviert und die Leistungsstellglieder gesperrt. Zudem wird vorzugsweise praktisch zeitgleich der Leistungsschalter (Hauptschütz) betätigt und die elektronische Steuerungseinheit von der Hochvoltbatterie getrennt.

Nachfolgend werden Ausführungsbeispiele der Erfindung anhand einer Zeichnung näher erläutert. Darin zeigen:
- FIG 1: schematisch ein Antriebssystem eines Hybridfahrzeugs mit elektrischen Hochvoltkomponenten, und
- FIG 2: in einem schematischen Blockschaltbild die Anbindung einer elektrischen Maschine und einer elektronischen Steuerungseinheit an eine Leiterschleife zum berührungssicheren Überspannungsschutz mittels Hall-Sensoren.

Einander entsprechende Teile sind in beiden Figuren mit den gleichen Bezugszeichen ersehen.

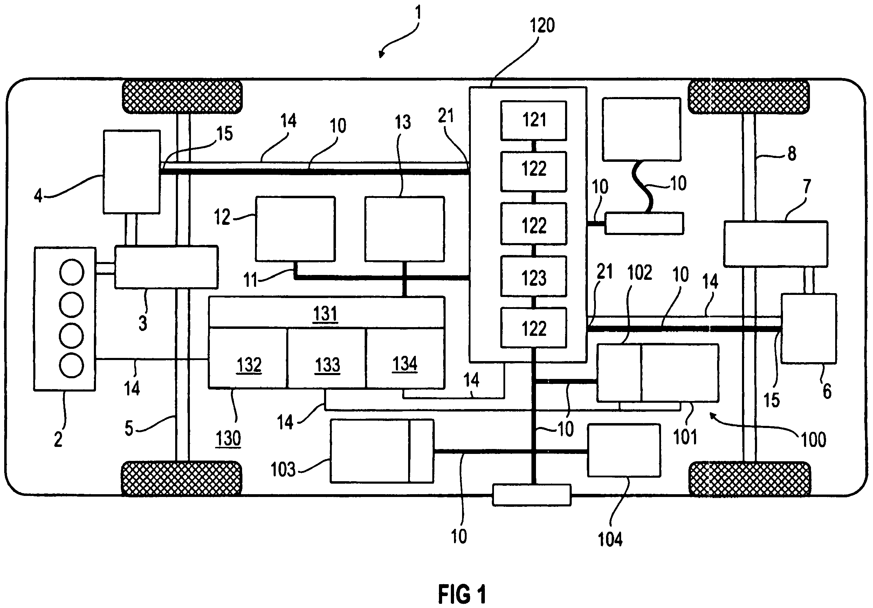

FIG 1 zeigt schematisch ein Hybridfahrzeug 1 mit einem Verbrennungsmotor 2, der über ein Getriebe 3, das mit einer ersten elektrischen Maschine 4 verbunden ist, mit einer Antriebs- oder Vorderachse 5 des Hybridfahrzeugs 1 gekoppelt ist. Eine zweite elektrische Maschine 6 ist analog über ein Getriebe 7 mit einer weiteren Antriebs- oder Hinterachse 8 des Hybridfahrzeugs 1 gekoppelt. Die elektrischen Maschinen 4 und 6 sind beispielsweise Synchron- oder Asynchronmaschinen.

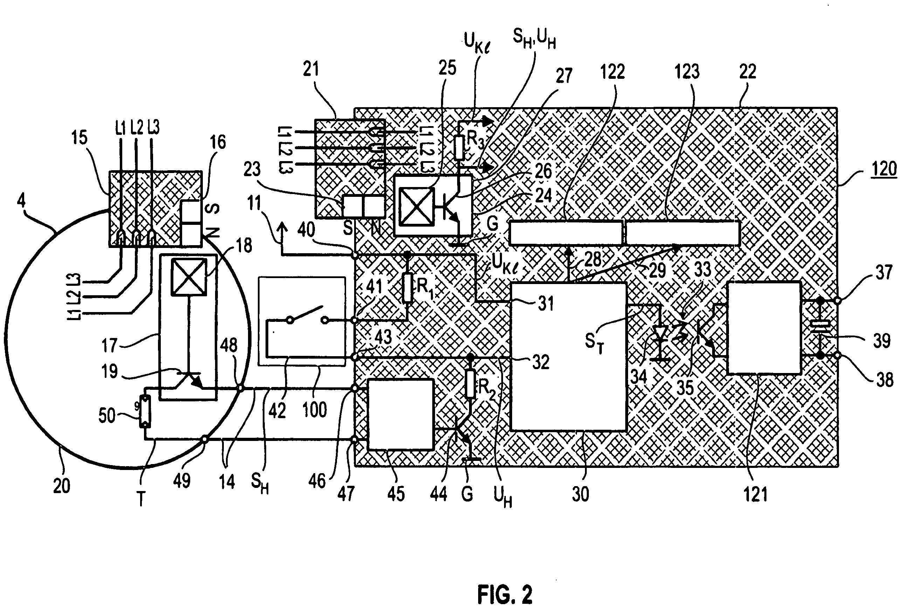

Als elektrische oder elektronische Hochvolt-Komponenten weist das elektrische Antriebssystem des Hybridfahrzeugs 1 zusätzlich zu den elektrischen Maschinen 4,6 im Wesentlichen eine Hochvoltbatterie (z. B. 300V-Batterie) 101 und einen dieser zugeordneten Leistungsschalter (Relais, Hauptschütz) 102 sowie eine elektrische Klimaanlage 103, eine Heizung 104 und einen Umrichtereinheit als Leistungsstellglied einer in Fig. 2 näher bezeichneten elektronischen Steuerungseinheit (ECU) 120 auf. Diese nachfolgend insgesamt mit 100 bezeichneten Hochvolt-Komponenten sind innerhalb eines Hochvolt-Spannungskreises oder Hochvolt-Spannungsnetztes über Hochvoltleitungen 10 untereinander und mit den elektrischen Maschinen 4,6 verbunden.

Über Niedervoltleitungen 11 sind eine 12V- oder 24V-Bordnetzbatterie 12 und Niederspannungs- oder Niedervoltlasten 13 mit der Umrichtereinheit sowie mit einem zentralen Fahrzeug- oder Bordnetzsteuerteil 130 verbunden. Dieses ist über Signalleitungen 14 mit der Steuerungseinheit 120 sowie mit dem Verbrennungsmotor 2 und mit der Hochvoltbatterie 101 verbunden.

Die elektronische Steuerungseinheit 120, die eine Entladeeinheit (discharge unit) 121 und eine Umrichtereinheit sowie einen oder mehrere Wandler (DCAC-Inverter) 122 und einen Stromrichter/Wandler (DCDC-converter) 123 umfasst, ist über Signalleitungen 14 mit den beiden elektrischen Maschinen 4, 6 verbunden.

Das Fahrzeug- oder Bordnetzsteuerteil 130 umfasst eine übergeordnete Fahrzeugsteuerung oder -regelung (vehicle control) 131, der eine Motorsteuerung (motor control unit) 132, ein Energiemanagement (energy management system) 133 und eine Antriebssteuerung bzw. -regelung (drive control unit) 134 unterlagert sind. Die elektrischen Maschinen 4,6 sind über die Hochvoltleitung 10 mit den entsprechenden elektrischen bzw. elektronischen Komponenten (Inverter) 122 der Umrichtereinheit der Steuerungseinheit 120 über als Hochvoltanschlüsse ausgeführte Kontaktverbindungen 15 verbunden.

Gemäß Fig. 2 ist die maschinenseitige Kontaktverbindung 15 als dreipoliger Steckkontakt mit integriertem Permanentenmagneten als Signalgeber 16 eines Hall-Sensors 17 ausgeführt. Der Hall-Sensor 17 bzw. ein Hall-IC mit integrierter Auswerteschaltung 18 und einem Transistor 19 als steuerbarer Halbleiterschalter ist in die elektrische Maschine 4 integriert, d. h. in deren Maschinengehäuse 20 eingesetzt. Auch kann die Kontaktverbindung 15 derart in das Maschinengehäuse 20 integriert sein, dass beim Öffnen des Maschinengehäuses 20 die Kontaktverbindung 15 geöffnet und die Verbindung zu anderen Hochvoltkomponenten 100 unterbrochen wird. Eine solche Kontaktverbindung 15 ist geeigneterweise an der Maschine 6 ebenfalls vorgesehen.

Eine weitere Kontaktverbindung 21 ist an der elektronischen Steuerungseinheit 120 und dort wiederum zweckmäßigerweise am Gerätegehäuse 22 vorgesehen. Auch kann die Kontaktverbindung 21 wiederum derart in die elektronische Steuerungseinheit 120 integriert sein, dass beim Öffnen des Gerätegehäuses 22 oder dessen Gehäusedeckels die Kontaktverbindung 21 gelöst und damit die Verbindung zu anderen Hochvolt-Komponenten 100 geöffnet wird. Ein Permanentmagnet dient wiederum als Signalgeber 23 eines Hall-Sensors 24 mit integrierter Auswerteschaltung 25 und mit einem gegen Masse oder Ground G geschalteten Transistor 26 als steuerbaren Halbleiterschalter. Der Hall-Sensor 24 weist einen Signalausgang 27 auf, an dem ein Sensor- oder Spannungssignal S_{H} über einen ohmschen Widerstand R₃ abgreifbar ist. Dessen Spannungswert U_{H} ändert sich bei der Detektion einer Kontaktöffnung der Kontaktverbindung 21, da der Hall-Sensor 24 das sich ändernde Magnetfeld des Permanentmagneten 23 beim Öffnen der Kontaktverbindung 21 erfasst. Die Kontaktverbindungen 15, 21 können auch Schraubverbindungen mit Deckel und Magneten sein.

Die elektronische Steuerungseinheit 120 weist einen Steuerbaustein 30 mit einem Referenzeingang 31 und mit einem Signaleingang 32 auf. Ausgangsseitig ist der Steuerbaustein 30 über eine optische Kopplung 33, die eine Leuchtdiode 34 und einen Fototransistor 35 umfasst, mit einer Entladungseinheit 121 gekoppelt. Diese ist ausgangsseitig an Anschlüsse 37, 38 zur Verbindung der Steuerungseinheit 120 mit der Hochvoltbatterie 101 geführt. Zwischen den Anschlüssen 37, 38 ist ein Zwischenkreiskondensator als Energiespeicher 39 geschaltet. Der Steuerungsbaustein 30 weist zudem Signalverbindungen 28, 29 zum DCAC-Wandler 122 bzw. zum DCDC-Wandler 123 auf.

Der Referenzeingang 31 des Steuerbausteins 30 ist geräteintem an einen ersten Eingang 40 der Steuerungseinheit 120 geführt. Dieser Eingang 40 ist einerseits über die Niedervoltleitung 11 mit der Bordnetzbatterie 12 verbunden. Andererseits ist dieser Eingang 40 geräteintem über einen ohmschen Wiederstand R₁ an einen zweiten Eingang 41 geführt. Dieser wiederum ist über eine Leitungsschleife 42 mit einem weiteren Eingang 43 verbunden, der seinerseits geräteintem an den Signaleingang 32 des Steuerbausteins 30 der elektronischen Steuerungseinheit 120 geführt ist. Mit dem Signaleingang 32 ist ein steuerbarer Halbleiterschalter in Form eines Transistors 44 verbunden, der kollektorseitig über einen ohmschen Widerstand R₂ an den Signaleingang 32 und mitterseitig gegen Masse (Ground) G geschaltet ist. Steuer- oder basisseitig ist der Transistor 44 mit einer Auswerteinheit 45 verbunden, die eingangsseitig an Signaleingänge 46, 47 der Steuerungseinheit 120 geführt ist. Hieran und an die Signalanschlüsse 48, 49 der elektrischen Maschine 4 ist die entsprechende Signalleitung 14 angeschlossen. Maschinenseitig sind diese Signalanschlüsse 48, 49 mit einem Temperatursensor 50 verbunden. In die Verbindung zwischen dem Temperatursensor 50 und dem Signalanschluß 48 ist die Kollektor-Emitter-Strecke des Transistors 19 des Sensors 17 geschaltet. Dessen Auswerteschaltung 18 steuert den Transistor 19 in Abhängigkeit vom Zustand der Kontaktverbindung 15 an.

Die elektrische Leitungsschleife 42 zum Berührungsschutz verbindet zumindest diejenigen zu überwachenden Hochvolt-Komponenten 100 des Hybridfahrzeugs 1, bei denen ein Berührungsschutz vorgesehen ist. Wird bei einer dieser Hochvolt-Komponenten 100 eine Kontaktverbindung geöffnet, beispielsweise indem ein entsprechendes Gerät geöffnet oder ein Steckkontakt gelöst wird, so erzeugt der Steuerbaustein 30 der elektronischen Steuerungseinheit 120 ein Steuersignal S_{T} zur Aktivierung der Entladungseinheit 121. Zumindest annähernd gleichzeitig mit der Ansteuerung des Hauptschützes 102 und daher der Unterbrechung des Hochvolt-Spannungskreises 100 wird der Energiespeicher 39 entladen. Bei geöffneter Leitungsschleife 42 in Folge eines Kurzschlusses oder einer Unterbrechung einer Hochvolt-Komponente 100, was durch das geöffnete Schaltersymbol veranschaulicht ist, ändert sich der Spannungswert U_{H} am Signaleingang 32 des Steuerbausteins 30.

Analog erzeugt der Steuerbaustein 30 das Steuersignal S_{T}, wenn die geräteseitige Kontaktverbindung 21 der elektronischen Steuerungseinheit 120 geöffnet ist. Wird demnach die geräteseitige Kontaktverbindung 21 geöffnet, so erzeugt der Sensor 24 einen entsprechenden Spannungswert U_{H} am Signaleingang 32 des Steuerbausteins 30. Hierzu sind in nicht näher dargestellter Weise der Transistor 26 des Hall-Sensors 24 und der Transistor 44 in Reihe geschaltet, wobei der Transistor 26 kollektorseitig mit dem Widerstand R₂ und mitterseitig mit dem Transistor 44 verbunden ist. Der dargestellte Widerstand R₃ kann dann entfallen. Alternativ kann der Transistor 26 des Hall-Sensors 24 an einen (nicht dargestellten) weiteren Eingang des Steuerbausteins 30 angeschlossen und der Widerstand R₃ an die Referenzspannung U_{Kl} geführt sein.

Der Steuerbaustein 30 vergleicht den aktuellen Spannungswert U_{H} mit einem Referenzwert U_{Kl}, der vorzugsweise der Klemmspannung U_{Kl} = (+)14V der Bordnetzbatterie 12 entspricht. Im unterbrechungs- und fehlerfreien Betrieb ist dieser Spannungswert U_{H} am Signaleingang 32 des Steuerbausteins 30 als Testsignal zweckmäßigerweise auf die halbe Klemmspannung U_{Kl} der Bordnetzbatterie (U_{H} =½ U_{Kl}) gesetzt oder eingestellt. Beim einen separaten Eingang des Steuerbausteins 30 ist dieser Spannungswert näherungsweise null Volt (0V). Eine Änderung dieses Spannungswertes U_{H} infolge eines Öffnens der Kontaktverbindung 21 wird daher aufgrund der Anbindung des geräteseitigen Sensors 24 an die Leiterschleife 42 von der Steuerungseinheit 120 zur Aktivierung der Entladungseinheit 121 herangezogen.

Analog ist auch der maschinenseitige Sensor 17 an die Leiterschleife 42 angebunden. Hierzu wird die Signalleitung 14 des Temperatursensors 50 genutzt, über die das betriebsbedingte Temperatursignal T des Temperatursensors 50 an die Auswerteinheit 45 geführt ist. Wird die maschinenseitige Kontaktverbindung 15 geöffnet, so wird dies vom Sensor 17 erfasst. Hierzu steuert die Auswerteschaltung 18 den Transistor 19 derart an, so dass beispielsweise kein oder ein unplausibles Temperatursignal T über die Signalleitung 14 an die Auswerteeinheit 45 geführt wird. Diese Information bzw. dieser Zustand wird von der Auswerteeinheit 45 praktisch als entsprechendes Sensorsignal S_{H} erkannt, so dass ein entsprechendes Steuersignal an den Steuereingang (Basis) des Transistors 44 geführt und dieser entsprechend angesteuert wird. Demzufolge ändert sich wiederum der Spannungswert U_{H} am Signaleingang 32 des Steuerbausteins 30. Somit ist auch der maschinenseitige Sensor 17 - wiederum insbesondere über den Signaleingang 32 des Steuerbausteins 30 - an die Leiterschleife 42 angebunden.

Auch bei geöffneter Kontaktverbindung 15 oder 21 weicht der Spannungswert U_{H} am Signaleingang 32 von dem Referenzwert (U_{H} =½ U_{Kl}) des Steuerbausteins 30 ab. So wird beispielsweise auf eine fehlerhafte Leitungsschleife 42 bzw. auf eine geöffnete Kontaktverbindung 15, 21 erkannt, wenn der Spannungswert U_{H} größer ist als 2/3 oder kleiner als 1/3 der Klemmspannung U_{Kl} ist. In einem solchen Fall der Unterschreitung oder Überschreitung des Referenzwertes ½ U_{Kl} wird der Hauptschütz 102 geöffnet und somit praktisch jede Hochvolt-Komponente 100 deaktiviert. Zeitglich wird aufgrund der Ansteuerung der Entladungseinheit 121 über den Steuerbaustein 30 der elektronischen Steuereinheit 120 die im Energiespeicher 39 gespeicherte Restladung aus dem Hochvoltsystem des Hybridfahrzeugs herausgenommen.

Eine solche Deaktivierung der Hochvolt-Komponenten 100 sowie der Aktivierung der Entladungseinheit 121 für die Entladung des Energiespeichers 39 gewährleistet einen zuverlässigen Berühr- bzw. Zugangsschutz innerhalb kürzester Zeit. Dies ist insbesondere bei Wartungs- und Reparaturarbeiten am Hybridfahrzeug 1 ein wesentlicher Sicherheitsaspekt zur Vermeidung potenzieller Verletzungsgefahren in Folge der Berührung von Hochvolt-Komponenten 100, die entsprechend hohe Spannungen führen. Ein Berührschutz durch die Deaktivierung der Hochvolt-Komponenten 100 einerseits und die praktisch zeitgleiche Aktivierung der Entladungseinheit 121 zur Reduzierung der Restladung der Energiespeicher 39 innerhalb kürzester Zeit auf Null oder auf gefahrlose Spannungswerte erfolgt zweckmäßigerweise dann, wenn die Leitungsschleife 42 unterbrochen ist, ein Kurzschluss innerhalb der Leitschleife 42 gegen Maße G bzw. gegen das Pluspotenzial (+) 14 V erfolgt, oder wenn die 14V-Bordnetzspannung U_{Kl} fehlt, d. h. U_{Kl} = 0 ist.

### Bezugszeichenliste

- 1: Hybridfahrzeug
- 2: Verbrennungsmotor
- 3: Getriebe
- 4: Maschine
- 5: Vorderachse
- 6: Maschine
- 7: Getriebe
- 8: Hinterachse
- 9:
- 10: Hochvoltleitung
- 11: Niedervoltleitung
- 12: Bordnetzbatterie
- 13: Niedervoltlast
- 14: Signalleitung
- 15: Kontaktverbindung
- 16: Signalgeber
- 17: Hall-Sensor
- 18: Auswerteschaltung
- 19: Halbleiterschalter/Transistor
- 20: Maschinengehäuse
- 21: Kontaktverbindung
- 22: Gerätegehäuse
- 23: Signalgeber
- 24: Hall-Sensor
- 25: Auswerteschaltung
- 26: Halbleiterschalter/Transistor
- 27: Signalausgang
- 28: Signalverbindung
- 29: Signalverbindung
- 30: Steuerbaustein
- 31: Referenzeingang
- 32: Signaleingang
- 33: optische Kopplung
- 34: Leuchtdiode
- 35: Fototransistor

- 37: Anschluss
- 38: Anschluss
- 39: Energiespeicher/Kondensator
- 40: erster Eingang
- 41: zweiter Eingang
- 42: Leitungsschleife
- 43: dritter Eingang
- 44: Halbleiterschalter/Transistor
- 45: Auswerteeinheit
- 46: Signaleingang
- 47: Signaleingang
- 48: Signalanschluß
- 49: Signalanschluß
- 50: Temperatursensor
- 100: Hochvolt-Komponente
- 101: Hochvolt-Batterie
- 102: Leistungsschalter/Schütz
- 103: Klimaanlage
- 104: Heizung
- 120: Steuerungseinheit
- 121: Entladeeinheit
- 122: Wandler
- 123: Stromrichter
- 130: Bordnetzsteuerteil
- 131: Fahrzeugsteuerung
- 132: Motorsteuerung
- 133: Energiemanagement
- 134: Antriebssteuerung
- S_{T}: Steuersignal
- S_{H}: Sensorsignal
- T: Temperatursignal
- U_{H}: Spannungswert

## Patentansprüche

1. Überwachungsvorrichtung zum Berührungsschutz eines Hybridfahrzeugs (1) mit einer Anzahl von Hochvoltkomponenten (100) und mit einer an eine Niedervolt-Bordnetzbatterie (12) angeschlossenen elektronischen Steuerungseinheit (120), deren Leistungstellglieder (122,123) über einen Leistungsschalter (102) an eine Hochvoltbatterie (101) angeschlossen sind und mindestens eine elektrische Maschine (4,6) ansteuern, wobei die Hochvoltkomponenten (100) mittels einer Leitungsschleife (42) überwacht und bei geöffneter Leitungsschleife (42) deaktiviert sind,
**dadurch gekennzeichnet,**
**dass** ein magnetfeldsensitiver Sensor (17,24) einer lösbaren Kontaktverbindung (15,21) der elektrischen Maschine (4,6) und/oder der elektronischen Steuerungseinheit (120) derart an die Leitungsschleife (42) angebunden ist, dass ein Steuerbaustein (30) der elektronischen Steuerungseinheit (120) in Abhängigkeit eines beim Lösen der Kontaktverbindung (15,21) vom Sensor (17,24) erzeugten Sensorsignals (S_{H}, U_{H}) eine Entladungseinheit (121) zur berührungssicheren Entladung eines Energiespeichers (39) aktiviert.

2. Vorrichtung nach Anspruch 1,
**dadurch gekennzeichnet,**
**dass** der Steuerbaustein (30) der elektronischen Steuerungseinheit (120) bei einer Abweichung des Sensorsignals (S_{H} U_{H}) von einer Referenzspannung (U_{Kl}) ein Steuersignal (S_{T}) zur Aktivierung der Entladungseinheit (121) erzeugt.

3. Vorrichtung nach Anspruch 1 oder 2,
**dadurch gekennzeichnet,**
**dass** der Steuerbaustein (30) in Abhängigkeit des beim Lösen der Kontaktverbindung (15,21) vom Sensor (17,24) erzeugten Sensorsignals (S_{H}, U_{H}) ein Steuersignal zur Blockierung der Leistungsstellglieder (122,123) erzeugt.

4. Vorrichtung nach einem der Ansprüche 1 bis 3,
**dadurch gekennzeichnet,**
**dass** der Steuerbaustein (30) die Entladung des Energiespeichers (39) bei Überschreiten und/oder Unterschreiten eines Bruchteils der Klemmspannung (U_{Kl}) der Niedervolt-Bordnetzbatterie (12) aktiviert.

5. Vorrichtung nach einem der Ansprüche 1 bis 4,
**dadurch gekennzeichnet,**
**dass** die elektronische Steuerungseinheit (120) einen an die Niedervolt-Bordnetzbatterie (12) anschließbaren ersten Eingang (40) aufweist, der über einen zweiten Eingang (41) und über die an diesen anschließbare Leitungsschleife (42) mit einem dritten Eingang (43) verbunden ist, der über einen steuerbaren Halbleiterschalter (44) gegen das Bordnetzbezugspotential (G) schaltbar ist.

6. Vorrichtung nach Anspruch 5,
**dadurch gekennzeichnet,**
**dass** der erste Eingang (40) an einen Referenzeingang (31) und der dritte Eingang (43) an einen Signaleingang (32) des Steuerbausteins (30) geführt sind.

7. Vorrichtung nach einem der Ansprüche 1 bis 6,
**dadurch gekennzeichnet,**
**dass** der magnetfeldsensitive Sensor (17,24) mit einem der elektrischen Maschine (4,6) zugeordneten und über eine Signalleitung (14) an die elektronische Steuerungseinheit (120) angeschlossenen Temperatursensor (50) derart verbunden ist, dass beim Lösen der maschinenseitigen Kontaktverbindung (15) das Sensorsignal (S_{H}, U_{H}) über die Signalleitung (14) des Temperatursensors (50) der elektronischen Steuerungseinheit (120) zugeführt ist.

8. Vorrichtung nach Anspruch 7,
**dadurch gekennzeichnet,**
**dass** ein steuerbarer Halbleiterschalter (44) der elektronischen Steuerungseinheit (120) ansteuerseitig mit einer Auswerteeinheit (45) zur Auswertung eines
über die Signalleitung (14) geführten Sensor- bzw. Temperatursignals (T) verbunden ist.

9. Vorrichtung nach einem der Ansprüche 1 bis 8,
**dadurch gekennzeichnet,**
**dass** der magnetfeldsensitive Sensor (24) der lösbaren Kontaktverbindung (21) der elektronischen Steuerungseinheit (120) einen gegen das Bordnetzbezugspotential (G) schaltbaren Signalausgang (27) aufweist.

10. Vorrichtung nach einem der Ansprüche 1 bis 9,
**dadurch gekennzeichnet,**
**dass** der Leistungsschalter (102) bei geöffneter Leitungsschleife (42) öffnet und die elektronische Steuerungseinheit (120) von der Hochvoltbatterie (101) trennt.

11. Vorrichtung nach einem der Ansprüche 1 bis 10,
**dadurch gekennzeichnet,**
**dass** der magnetfeldsensitive Sensor (17,24) ein Hall-Effekt-Sensor ist.

12. Verfahren zur Hochvoltüberwachung eines Hybrid-Fahrzeugs (1) mit einer Anzahl von Hochvolt-Komponenten (100) und mit einer mindestens eine elektrische Maschine (4,6) ansteuernden elektronischen Steuerungseinheit (120), deren Leistungsstellglieder (122,123) über einen Leistungsschalter (102) an eine Hochvoltbatterie (101) angeschlossen sind, wobei die Hochvolt-Komponenten (100) mittels einer Leitungsschleife (42) überwacht und bei geöffneter Leitungsschleife (42) deaktiviert werden,
**dadurch gekennzeichnet,**
**dass** beim Lösen einer Kontaktverbindung (15,21) der elektrischen Maschine (4,6) und/oder der elektronischen Steuerungseinheit (120) von einem magnetfeldsensitiven Sensor (17,24) ein Sensorsignal (S_{H}, U_{H}) erzeugt und eine Entladungseinheit (121) zur berührungssicheren Entladung eines Energiespeichers (39) aktiviert wird.

13. Verfahren nach Anspruch 12,
**dadurch gekennzeichnet,**
**dass** bei geöffneter Leitungsschleife (42) der Leistungsschalter (102) betätigt und die elektronische Steuerungseinheit (120) von der Hochvoltbatterie (101) getrennt wird.

## Claims

1. Monitoring device for providing protection against electrical shock in a hybrid vehicle (1) having a number of high-voltage components (100) and having an electronic control unit (120) connected to a low-voltage vehicle electrical system battery (12), the power actuators (122, 123) of which electronic control unit are connected to a high-voltage battery (101) via a power switch (102) and actuate at least one electric machine (4, 6), the high-voltage components (100) being monitored by means of a looped circuit (42) and deactivated when the looped circuit (42) is open, **characterised in that** a magnetic-field-sensitive sensor (17, 24) of a releasable contact connection (15, 21) of the electric machine (4, 6) and/or of the electronic control unit (120) is connected to the looped circuit (42) in such a way that a control module (30) of the electronic control unit (120) activates a discharge unit (121) for the shock-proof discharging of an energy accumulator (39) according to a sensor signal (S_{H}, U_{H}) generated by the sensor (17, 24) when the contact connection (15, 21) is released.

2. Device according to claim 1, **characterised in that** the control module (30) of the electronic control unit (120) generates a control signal (S_{T}) for activating the discharge unit (121) when the sensor signal (S_{H}, U_{H}) deviates from a reference voltage (U_{Kl}).

3. Device according to either claim 1 or claim 2, **characterised in that** the control module (30) generates a control signal for locking the power actuators (122, 123) according to the sensor signal (S_{H}, U_{H}) generated by the sensor (17, 24) when the contact connection (15, 21) is released.

4. Device according to any one of claims 1 to 3, **characterised in that** the control module (30) activates the discharging of the energy accumulator (39) when a fraction of the terminal voltage (U_{Kl}) of the low-voltage vehicle electrical system battery (12) is exceeded and/or undershot.

5. Device according to any one of claims 1 to 4, **characterised in that** the electronic control unit (120) has a first input (40) connectable to the low-voltage vehicle electrical system battery (12) and connected, via a second input (41) and via the looped circuit (42), which is connectable thereto, to a third input (43) which is connectable to the vehicle electrical system reference potential (G) via a controllable semiconductor switch (44).

6. The device according to claim 5, **characterised in that** the first input (40) is connected to a reference input (31), and the third input (43) is connected to a signal input (32) of the control module (30).

7. Device according to any one of claims 1 to 6, **characterised in that** the magnetic-field-sensitive sensor (17, 24) is connected to a temperature sensor (50), which is assigned to the electric machine (4, 6) and is connected to the electronic control unit (120) via a signal line (14), in such a way that when the machine-side contact connection (15) is released, the sensor signal (S_{H}, U_{H}) is fed to the electronic control unit (120) via the signal line (14) of the temperature sensor (50).

8. The device according to claim 7, **characterised in that** a controllable semiconductor switch (44) of the electronic control unit (120) is connected on the actuation side to an evaluation unit (45) for evaluating a sensor or temperature signal (T) carried via the signal line (14).

9. Device according to any one of claims 1 to 8, **characterised in that** the magnetic-field-sensitive sensor (24) of the releasable contact connection (21) of the electronic control unit (120) comprises a signal output (27) that can be connected to the vehicle electrical system reference potential (G).

10. Device according to any one of claims 1 to 9, **characterised in that** the power switch (102) opens when the looped circuit (42) is open and disconnects the electronic control unit (120) from the high-voltage battery (101).

11. Device according to any one of claims 1 to 10, **characterised in that** the magnetic-field-sensitive sensor (17, 24) is a Hall effect sensor.

12. Method for monitoring high voltages of a hybrid vehicle (1) having a number of high-voltage components (100) and having an electronic control unit (120) for actuating at least one electric machine (4, 6), the power actuators (122, 123) of which electronic control unit are connected to a high-voltage battery (101) via a power switch (102), the high-voltage components (100) being monitored by means of a looped circuit (42) and deactivated when the looped circuit (42) is open, **characterised in that** when a contact connection (15, 21) of the electric machine(s) (4, 6) and/or of the electronic control unit (120) is released from a magnetic-field-sensitive sensor (17, 24), a sensor signal (S_{H}, U_{H}) is generated and a discharge unit (121) is activated for the shock-proof discharging of an energy storage device (39).

13. Method according to claim 12, **characterised in that** when the looped circuit (42) is open, the power switch (102) is actuated and the electronic control unit (120) is disconnected from the high-voltage battery (101).

## Revendications

1. Dispositif de surveillance pour la protection anti-contact d'un véhicule hybride (1), comportant une pluralité de composants haute tension (100) et avec une unité de commande électronique (120) connectée à une batterie de réseau de bord à basse tension (12) dont les actionneurs de puissance (122, 123) sont connectés à une batterie haute tension (101) via un disjoncteur (102) et commandent au moins un moteur électrique (4, 6), les composants haute tension (100) étant contrôlés au moyen d'une boucle de ligne (42) et désactivés si la boucle de ligne (42) est ouverte,
**caractérisé**
**en ce qu'**un capteur (17, 24) sensible au champ magnétique d'une liaison de contact (15, 21) amovible du moteur électrique (4, 6) et/ou de l'unité de commande électronique (120) est connecté à la boucle de ligne (42) de telle manière qu'un module de commande (30) de l'unité de commande électronique (120) active une unité de décharge (121) pour la décharge sécurisée anti-contact d'un accumulateur d'énergie (39) en fonction d'un signal de capteur (S_{H}, U_{H}) généré en cas d'ouverture de la liaison de contact (15, 21) par le capteur (17, 24).

2. Dispositif selon la revendication 1,
**caractérisé**
**en ce que** le module de commande (30) de l'unité de commande électronique (120) génère un signal de commande (S_{T}) pour activer l'unité de décharge (121) en cas d'écart du signal de capteur (S_{H}, U_{H}) par rapport à une tension de référence (U_{Kl}).

3. Dispositif selon la revendication 1 ou la revendication 2,
**caractérisé**
**en ce que** le module de commande (30) génère un signal de commande pour bloquer l'actionneur de puissance (122, 123) en fonction du signal de capteur (S_{H}, U_{H}) généré par le capteur (17, 24) en cas d'ouverture de la liaison de contact (15, 21).

4. Dispositif selon l'une des revendications 1 à 3,
**caractérisé**
**en ce que** le module de commande (30) active la décharge de l'accumulateur d'énergie (39) en cas de dépassement et/ou de sous-dépassement d'une fraction de la tension de travail (U_{Kl}) de la batterie de réseau de bord à basse tension (12).

5. Dispositif selon l'une des revendications 1 à 4,
**caractérisé**
**en ce que** l'unité de commande électronique (120) comporte une première entrée (40) connectable à la batterie de réseau de bord à basse tension (12), laquelle est reliée à une troisième entrée (43) via une deuxième entrée (41) et via la boucle de ligne (42) connectable à celle-ci, ladite troisième entrée étant commutable contre le potentiel de référence (G) du réseau de bord par l'intermédiaire d'un commutateur statique (44) commandable.

6. Dispositif selon la revendication 5,
**caractérisé**
**en ce que** la première entrée (40) est conduite vers une entrée de référence (31) et la troisième entrée (43) vers une entrée de signal (32) du module de commande (30).

7. Dispositif selon l'une des revendications 1 à 6,
**caractérisé**
**en ce que** le capteur (17, 24) sensible au champ magnétique est relié à un capteur de température (50) affecté au moteur électrique (4, 6) et connecté à l'unité de commande électronique (120) via une conduite de signal (14), de telle manière qu'en cas d'ouverture de la liaison de contact (15) côté moteur, le signal de capteur (S_{H}, U_{H}) est délivré à l'unité de commande électronique (120) par la conduite de signal (14) du capteur de température (50).

8. Dispositif selon la revendication 7,
**caractérisé**
**en ce qu'**un commutateur statique (44) commandable de l'unité de commande électronique (120) est relié côté commande avec une unité d'analyse (45) pour l'évaluation d'un signal de capteur ou de température (T) délivré par la conduite de signal (14).

9. Dispositif selon l'une des revendications 1 à 8,
**caractérisé**
**en ce que** le capteur (24) sensible au champ magnétique de la liaison de contact (21) amovible de l'unité de commande électronique (120) comporte une sortie de signal (27) commutable contre le potentiel de référence (G) du réseau de bord.

10. Dispositif selon l'une des revendications 1 à 9,
**caractérisé**
**en ce que** le disjoncteur (102) s'ouvre et coupe l'unité de commande électronique (120) de la batterie haute tension (101) si la boucle de ligne (42) est ouverte.

11. Dispositif selon l'une des revendications 1 à 10,
**caractérisé**
**en ce que** le capteur (17, 24) sensible au champ magnétique est un capteur à effet Hall.

12. Procédé de surveillance haute tension d'un véhicule hybride (1) avec une pluralité de composants haute tension (100) et une unité de commande électronique (120) commandant au moins un moteur électrique (4, 6), dont les actionneurs de puissance (122, 123) sont connectés à une batterie haute tension (101) via un disjoncteur (102), les composants haute tension (100) étant contrôlés au moyen d'une boucle de ligne (42) et désactivés si la boucle de ligne (42) est ouverte,
**caractérisé**
**en ce qu'**en cas d'ouverture d'une liaison de contact (15, 21) du moteur électrique (4, 6) et/ou de l'unité de commande électronique (120), un signal de capteur (S_{H}, U_{H}) est généré par un capteur (17, 24) sensible au champ magnétique et une unité de décharge (121) est activée pour la décharge sécurisée anti-contact d'un accumulateur d'énergie (39).

13. Procédé selon la revendication 12,
**caractérisé**
**en ce que** le disjoncteur (102) est actionné et l'unité de commande électronique (120) coupée de la batterie haute tension (101) si la boucle de ligne (42) est ouverte.
